# EUROPÄISCHE PATENTSCHRIFT

(11) **EP 3 728 880 B1**
(45) Veröffentlichungstag und Bekanntmachung des Hinweises auf die Patenterteilung: **08.06.2022**
(21) Anmeldenummer: 18830449.7
(22) Anmeldetag: 18.12.2018
(51) Int. Cl.: F16C 17/24, F16C 19/52, F16C 33/58, F16C 41/00, G01N 27/02

(54) **VORRICHTUNG UND EIN VERFAHREN ZUR ERMITTLUNG EINER ZUSTANDSGRÖSSE**
DEVICE AND METHOD FOR DETERMINING A STATE VARIABLE
DISPOSITIF ET PROCÉDÉ DE DÉTERMINATION D'UNE GRANDEUR D'ÉTAT

(30) Priorität: 18.12.2017 DE 102017130329
(43) Veröffentlichungstag der Anmeldung: 28.10.2020
(73) Patentinhaber: Technische Universität Darmstadt, 64289 Darmstadt (DE)
(72) Erfinder: MARTIN, Georg, 64283 Darmstadt (DE); SCHIRRA, Tobias, 64285 Darmstadt (DE)
(74) Vertreter: LifeTech IP Spies & Behrndt Patentanwälte PartG mbB
(86) Internationale Anmeldenummer: PCT/EP2018/085507
(87) Internationale Veröffentlichungsnummer: WO 2019/121689

(56) Entgegenhaltungen:
- AT-B- 398 844
- DE-A1-102012 215 957
- DE-A1-102014 104 963
- DE-U1-202011 002 485
- JP-A- H06 193 629
- US-A1- 2002 092 360
- US-A1- 2011 088 435
- US-A1- 2014 103 940
- US-A1- 2015 176 638
- US-A1- 2016 216 173
- US-B1- 6 300 701
- SCHIRRA ET AL: "Konstruieren mit mikroinvasiven intelligenten Maschinenelementen - MI2ME - Wälzlager als Element der Energie- und Signalübertragung", DESIGN FOR X : BEITRÄGE ZUM 28. DFX-SYMPOSIUM, 4-5 OKTOBER 2017, 1 October 2017 (2017-10-01), - 5 October 2017 (2017-10-05), pages 153-163, XP055758022, DE ISBN: 978-3-946094-20-3 Retrieved from the Internet: URL:https://www.designsociety.org/publicat ion/39989/Konstruieren+mit+Mikroinvasiven+ Intelligenten+Maschinenelementen+-+MI2ME+- +Wälzlager+als+Element+der+Energie-+und+Si gnalübertragung>

## Beschreibung

Die vorliegende Erfindung bezieht sich auf eine Vorrichtung und ein Verfahren zur Ermittlung einer Zustandsgröße und insbesondere auf ein Wälzlager, das als Sensor nutzbar ist.

### Hintergrund

Für viele Anwendungen ist es wichtig, verschiedene Zustandsgrößen in Bezug auf zwei relativ zueinander bewegten Elementen zu ermitteln. Dies betrifft beispielsweise eine Belastung der Elemente bei einer Kraftübertragung oder die übertragene Kraft selbst. Die Elemente können beispielsweise Bestandteile eines Getriebes oder einer Linearführung oder Teile eines Lagers sein (z.B. eines Wälzlagers). Ebenso ist es häufig wünschenswert andere dynamische Sensorgrößen wie z.B. einen Drehwinkel, einen Versatz, eine relative Geschwindigkeit u.a.m. zwischen den zwei relativ zueinander beweglichen Elementen als Zustandsgrößen zu messen.

Um solche Sensorgrößen messen zu können, werden in konventionelle Lagern beispielsweise Sensoren integriert. So ist in der DE 10 2012 215 957 A1 ein Resolverlager offenbart, welches einen integrierten Drehzahlsensor oder Winkelsensor aufweist. Die Integration einer solchen Sensorik ist nicht nur mit hohen Kosten verbunden, sondern vergrößert auch den Bauraum des Lagers. Außerdem sind zu deren Integration häufig umfangreiche Änderungen an der umgebenden Struktur erforderlich, die nicht immer durchführbar sind bzw. die man vermeiden möchte. Die Schrift Schirra et al.: "Konstruieren mit mikroinvasiven intelligenten Maschinenelementen - MI2ME - Wälzlager als Element der Energie- und Signalübertragung" zeigt eine gattungsgemäße Vorrichtung zur Ermittlung einer Zustandsgröße.

Daher besteht ein Bedarf nach weiteren Möglichkeiten, um Zustandsgrößen von relativ zueinander bewegten Elementen zuverlässig erfassen bzw. indirekt ermitteln zu können.

### Zusammenfassung

Zumindest ein Teil der obengenannten Probleme wird durch eine Vorrichtung zur Ermittlung einer Zustandsgröße nach Anspruch 1 und ein Verfahren zur Ermittlung einer Zustandsgröße nach Anspruch 5 gelöst. Die abhängigen Ansprüche definieren weitere vorteilhafte Ausführungsformen für die Vorrichtung.

Die vorliegende Erfindung bezieht sich auf eine Vorrichtung zur Ermittlung einer Zustandsgröße. Die Vorrichtung umfasst: ein erstes Element und ein zweites Element die ausgebildet sind um sich relativ zueinander zu bewegen, wobei das erste Element ein Außenring eines Wälzlagers ist und das zweite Element ein Innenring des Wälzlagers ist und der Stromfluss teilweise durch ein Schmiermittel führt, eine Auswerteeinheit, eine erste elektrische Verbindung zwischen der Auswerteeinheit und dem ersten Element und eine zweite elektrische Verbindung zwischen der Auswerteeinheit und dem zweiten Element. Die Auswerteeinheit ist ausgebildet, um einen elektrischen Stromfluss zwischen dem ersten Element und dem zweiten Element zu erzeugen und eine entsprechende Impedanz (entlang des Stromflusses) zu ermitteln und basierend auf der ermittelten Impedanz die Zustandsgröße zu ermitteln. Die Auswerteeinheit ist weiter ausgebildet, um basierend auf der ermittelten Impedanz zumindest eine der folgenden Zustandsgrößen zu ermitteln: eine radial- oder axial-wirkende Kraft, eine Schmierfilmdicke, eine Änderung des Schmiermittels, eine Drehzahl, eine Temperatur, ein Alterungsgrad, eine Wellenverlagerung, eine Belastung. Der Außenring oder der Innenring weisen eine elektrische Isolierung auf, um den Außenring elektrisch isoliert durch einen Lagersitz zu halten oder um ein drehbares Element elektrisch isoliert von dem Innenring zu lagern. Auf diese Weise kann der elektrische Stromfluss - ungestört vom Lagersitz oder dem drehbaren Element - von der Auswerteeinheit (nur) durch das Wälzlager fließen. Es ist von Vorteil, dass damit möglichst viele Störeinflüsse (z. B. von anderen Lagern oder drehbaren Komponenten) beseitigt werden, sodass nur das Wälzlager vermessen wird. Die erste elektrische Verbindung ist direkt mit dem Außenring verbunden. Dies kann beispielswiese über ein Kabel oder eine elektrische Beschichtung eines isolierenden Elementes geschehen. Die zweite elektrische Verbindung koppelt an den Innenring über zumindest eine der folgenden Kopplungen: eine kapazitive Kopplung oder einen Schleifkontakt, wobei die kapazitive Kopplung zwischen der Auswerteeinheit und dem Innenring des Wälzlagers durch eine Kalibrierung ermittelt wird.

Das erste Element und/oder das zweite Element können ausgebildet sein, um durch eine Elementhalterung gehalten zu werden. Optional umfassen dann das erste Element und/oder das zweite Element eine Isolierschicht zur elektrischen Isolation zu der Elementhalterung. Die Elementhalterung kann beispielsweise ein Lagersitz sein.

Optional umfasst die Vorrichtung weiter ein Kontaktbauteil, um einen elektrischen Kontakt zu dem ersten Element oder dem zweiten Element während der Bewegung herzustellen. Das Kontaktbauteil kann beispielsweise ein galvanisches Verbindungselement wie beispielsweise ein Schleifkontakt sein. Das Kontaktbauteil kann optional aber auch ein kapazitives oder induktives Verbindungselement umfassen, um die elektrische Verbindung kapazitiv oder induktiv herzustellen. Das Kontaktbauteil kann sich relativ zu dem ersten Element oder dem zweiten Element bewegen. Der beispielhafte Schleifkontakt kann beispielsweise eine drehende Welle oder einen drehenden Innenring des beispielhaften Wälzlagers elektrisch kontaktieren. Das Kontaktbauteil kann mit der ersten oder mit der zweiten elektrischen Verbindung elektrisch verbunden sein.

Optional ist die Auswerteeinheit ausgebildet, um zumindest eine der folgenden Größen von externen Sensoren zu erhalten: eine Temperatur, eine Drehzahl. Die Auswerteeinheit kann weiter ausgebildet sein, um die Impedanz und/oder eine Änderung der Zustandsgröße unter Nutzung dieser Größen zu ermitteln.

Die vorliegende Erfindung bezieht sich auch auf ein Verfahren zur Ermittlung einer Zustandsgröße mit der erfindungsgemäßen Vorrichtung.

Das Verfahren umfasst die Schritte:
- Bewegen eines ersten Elementes relativ zu einem zweiten Element;
- Übertragen eines Stromsignals zwischen dem ersten Element und dem zweiten Element;
- Ermitteln einer Impedanz für das Stromsignal; und
- basierend auf der ermittelten Impedanz, Ermitteln der Zustandsgröße.
Gemäß weiteren Ausführungsbeispielen kann die Zustandsgröße oder deren Änderung auch über eine Impedanzänderung ermittelt werden. Das kann für Anwendungen vorteilhaft sein, wo es auf den Betrag der Zustandsgröße (z. B. einer Kraft) nicht zwingend ankommt, sondern vor allem plötzliche starke Änderungen erfasst werden sollen (die z. B. durch Stöße verursacht werden).

Ausführungsbeispiele lösen zumindest einen Teil der obengenannten Probleme durch ein Ermitteln einer oder mehrerer Zustandsgrößen basierend auf einer gemessenen Impedanz oder deren Änderung. Die Ursache für die Änderung der Impedanz liegt beispielsweise in einer Änderung der Schmierfilmdicke an den Kontaktpunkten der relativ zueinander bewegten Elemente. Der elektrische Stromfluss durch die Elemente umfasst zum Beispiel ein definiertes Signal (z. B. eine bestimmte Abfolge von Pulsen oder ein definiertes Wechselstromsignal), welches in Abhängigkeit der Zustandsgröße sich ändert. Daher können aus dem empfangenen Signal Rückschlüsse auf die Änderung der Impedanz und damit eine Änderung der Zustandsgrößen gezogen werden. Die Zustandsgröße kann daher insbesondere auch indirekt ermittelt werden.

Ausführungsbeispiele bieten insbesondere die folgenden Vorteile:
- Verschiedenste Zustandsänderungen können gemessen werden. So kann aus der gemessenen Schmierfilmdicke auf eine veränderte Drehzahl, Last, Wellenverlagerung infolge von Radial- und Axialkräften, Wellenschiefstellung, Temperaturänderungen, eine Schmierstoffzustandsänderung geschlossen werden. Diese Zustandsgrößen sind in einer Vielzahl von Anwendungen oder für die Überwachung von Maschinen und Prozessen relevant.
- Es ist ebenfalls möglich, prozessnahe Messungen der Zustandsgrößen durchzuführen. Es braucht kein besonderer Aufwand betrieben werden, da keine Sensoren in den bewegten Elementen zu integrieren sind.
- Bei Schienenfahrzeugen kann beispielsweise auf einfache Weise eine Sensorik implementiert werden, die die Schwingungen der Achsen im Schienenverkehr messen/überwachen. Solche Schwingungen können durch Flachstellen am Rad hervorgerufen werden und sollten möglichst zeitnah detektiert werden.

### Kurzbeschreibung der Figuren

Das Ausführungsbeispiel der vorliegenden Erfindung wird besser verstanden anhand der folgenden detaillierten Beschreibung und den beiliegenden Zeichnungen, die jedoch nicht so verstanden werden sollten, dass sie die Offenbarung auf die spezifische Ausführungsform einschränken, sondern lediglich der Erklärung und dem Verständnis dienen.

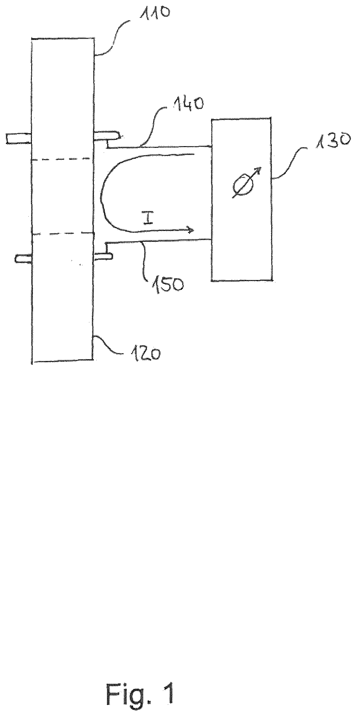

- Fig. 1: zeigt eine beispielhafte Vorrichtung.
- Fig. 2: zeigt ein weiteres Beispiel zur Messung von Zustandsgrößen in Wälzlagern.
- Fig. 3: zeigt ein erfindungsgemäßes Ausführungsbeispiel zur Messung von Zustandsgrößen in Wälzlagern.

### Detaillierte Beschreibung

Die Vorrichtung umfasst ein erstes Element 110 und ein zweites Element 120, eine Auswerteeinheit 130, eine erste elektrische Verbindung 140 und eine zweite elektrische Verbindung 150. Das erste und zweite Element 110, 120 stehen in Kontakt und sind relativ zueinander bewegbar, wobei ein Schmiermittel vorgesehen sein kann. Die erste elektrische Verbindung 140 ist zwischen der Auswerteeinheit 130 und dem ersten Element 110 und die zweite elektrische Verbindung 150 zwischen der Auswerteeinheit 130 und dem zweiten Element 120 ausgebildet. Die Auswerteeinheit 130 ist ausgebildet, um einen elektrischen Stromfluss I über die erste und zweite elektrische Verbindung 140, 150 zwischen dem ersten Element 110 und dem zweiten Element 120 zu erzeugen und eine Impedanz für diesen Strom I zu ermitteln. Basierend auf der ermittelten Impedanz wird die Zustandsgröße durch die Auswerteeinheit ermittelt.

Das erste Element und das zweite Element 110, 120 können beispielsweise relative zueinander drehbare Zahnräder, Teile von Kugellagern/Wälzlagern/Gleitlagern sein. Es können aber auch Zahnstangen oder andere linear bewegte Objekte umfassen. Es ist nicht zwingend, dass die Zustandsgröße selbst ermittelt wird. Es kann ebenso eine Änderung einer Zustandsgröße ermittelt werden, wobei hierfür eine Änderung der Impedanz detektiert wird. So kann ein plötzliches Überschreiten von Toleranzgrenzen als ein besonderes Ereignis detektiert werden und eine entsprechende Alarmierung ausgelöst werden.

Ausführungsbeispiele nutzen die Impedanz und nicht nur den elektrischen Ohm'schen Widerstand zu Ermittlung der Zustandsgröße. Die ebenfalls vorhandene Kapazität oder eine möglicherweise messbare Induktivität entlang des Strompfades I lässt Rückschlüsse auf die Zustandsgröße zu. Daher wird als elektrisches Signal typischerweise ein elektrischer Wechselstrom mit einer vorbestimmten Charakteristik entlang des Strompfades I aufgeprägt. Es erfolgt dann eine Analyse, wie sich das Signal durch die bewegten Elemente 110, 120 ändert. Aus dem Resultat wird ein Rückschluss auf die Zustandsgröße erhalten.

Verschiedenste Zustandsgrößen beeinflussen die Impedanz. So führt die Bewegung beispielsweise zu lastabhängigen Änderungen in den hydrodynamischen Schmierfilmen. Dies betrifft z. B. eine veränderte Verteilung, Viskosität, Änderungen der physikalischen oder chemischen Eigenschaften, eine geänderte Zusammensetzung infolge von Metallspänen, u.a.m. Hieraus kann zumindest eine der folgenden Größen ermittelt werden: eine Drehzahl, eine Last, eine Wellenverlagerung infolge von Radial- und Axialkräften, eine Wellenschiefstellung, eine Temperatur, ein Schmierstoffzustand.

Die Fig. zeigt ein weiteres Beispiel zur Messung von Zustandsgrößen für beispielhafte Wälzlager. Die Erkenntnisse der Erfindung können beispielhaft auch für Gleitlager, Dichtungen, Linearführungen und Zahnräder und andere relativ zueinander bewegten Elemente genutzt werden, zwischen denen ein Stromfluss aufprägbar ist und die typischerweise geschmiert werden.

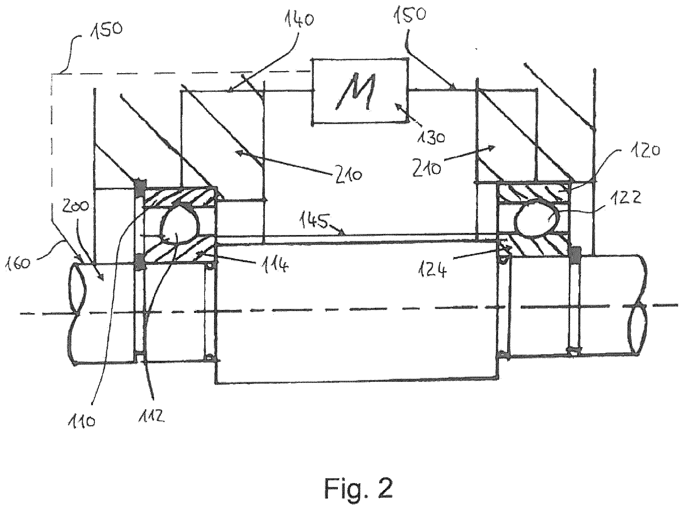

In der Fig. 2 wird eine Welle 200 durch ein erstes Wälzlager 110, 112, 114 und ein zweites Wälzlager 120, 122, 124 gegenüber Lagersitzen 210 gelagert. Das erste Wälzlager umfasst einen Außenring 110 und einen Innenring 114, zwischen denen beispielsweise eine Vielzahl von Rollelementen 112 (z. B. Kugeln oder Rollen) ausgebildet sind. Auch das zweite Wälzlager umfasst einen Außenring 120 und einen Innenring 124, zwischen denen wiederum eine Vielzahl von Rollelementen 122 (Kugeln, Rollen, etc.) ausgebildet sind. Außerdem umfasst das Ausführungsbeispiel eine Auswerteeinheit 130, die über eine erste elektrische Verbindung 140 mit dem Außenring 110 des ersten Wälzlagers und über eine zweite elektrische Verbindung 150 mit dem Außenring 120 des zweiten Wälzlagers elektrisch verbunden ist.

Das erste Wälzlager 110, 112, 114 und/oder das zweite Wälzlager 120, 122, 124 sind gegenüber den Lagersitzen 210 elektrisch isoliert. Dies ist insbesondere dann vorteilhaft, wenn die Lagersitze 210 selbst elektrisch leitfähig sind und nicht voneinander isoliert sind, sodass dadurch ein Kurzschluss vermieden werden kann.

Somit ist es möglich, dass die Auswerteeinheit 130 einen elektrischen Strom entlang des folgenden Pfades leitet: über die erste elektrische Verbindung 140 zu dem Außenring 110 des ersten Wälzlagers, über die Rollelemente 112, den Innenring 114 des ersten Wälzlagers, der Welle 200, über den Innenring 124, die Rollelemente 122 und den Außenring 120 des zweiten Wälzlagers zu der zweiten elektrische Verbindung 150. In diesem Beispiel ist der Außenring 110 des ersten Wälzlagers das zuvor genannte erste Element und der Außenring 120 des zweiten Wälzlagers das zuvor genannte zweite Element. Die Lagersitze 210 sind hier die Elementhalterung(en). Die Zuordnung kann aber auch anders gewählt sein - je nachdem wie der elektrische Strom I geführt wird.

Falls die Welle 200 selbst nicht elektrisch leitfähig ist oder nicht ausreichend von anderen Komponenten isoliert ist, kann optional eine weitere elektrische Verbindung 145 zwischen dem Innenring des ersten Wälzlagers 114 und dem Innenring des zweiten Wälzlagers 124 ausgebildet sein. Es ist ebenfalls möglich, dass eine erste elektrische Verbindung 140 zwischen der Auswerteeinheit 130 und dem Außenring 110 des ersten Wälzlagers ausgebildet wird und der Stromkreis über einen Schleifkontakt oder Schleifring 160 geschlossen wird (optional kann auch ein kapazitiver oder ein induktiver Kontakt hergestellt werden). Der beispielhafte Schleifkontakt 160 kontaktiert die Welle 200 (wenn sie elektrisch leitfähig ist) und führt den Strom über die zweite elektrische Verbindung 150 zu der Auswerteeinheit zurück. Auf diese Weise kann die Änderung der Impedanz lediglich für ein Wälzlager gemessen werden.

Daher kann der Stromkreis I einerseits zwischen den beiden Wälzlagern über die Welle 200 geschlossen werden - insbesondere solange kein Nebenschluss über ein anderes Bauteil auf der Welle 200 vorhanden ist. Ist dies nicht der Fall, kann auch die Welle 200 gegen die Wälzlager isoliert werden und die beiden Innenringe 114, 124 der Wälzlager können durch die weitere Verbindung 145 elektrisch miteinander verbunden werden.

Die Wälzlager sind in der Fig. 2 beispielhaft als Rillenkugellager dargestellt. Die Erfindung ist jedoch nicht auf eine spezifischen Wälzlagerform eingeschränkt. Die Impedanzänderung kann, wie gesagt, durch eine Änderung der Schmierfilmdicke innerhalb des beispielhaften Wälzlagers verursacht werden, was wiederum durch eine Verlagerung des Innenringes 114 relativ zum Außenring 110 oder durch eine veränderte Belastung des Wälzlagers verursacht sein kann. Die veränderte Schmierfilmdicke wird als Impedanzänderung durch die Auswerteeinheit 130 gemessen.

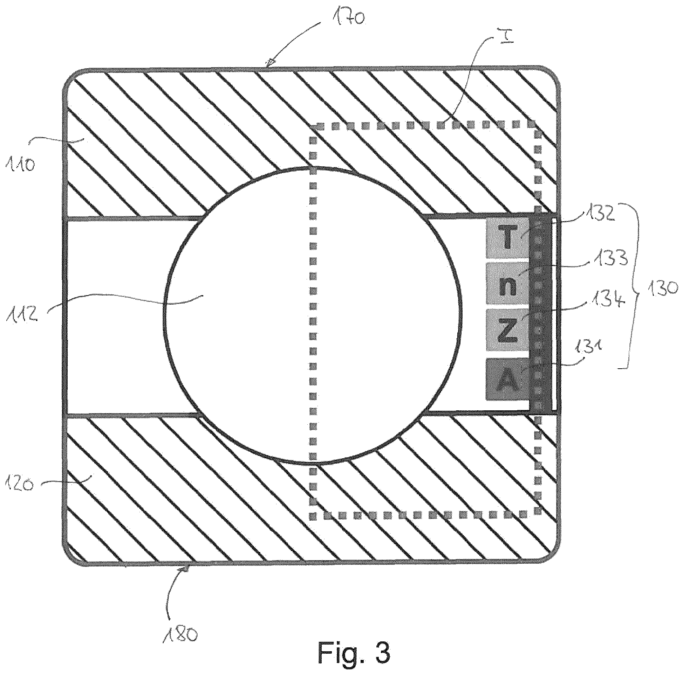

Fig. 3 zeigt ein erfindungsgemäßes Ausführungsbeispiel, bei dem der elektrische Stromfluss I nur durch ein Wälzlager mit einem Außenring 110 (erstes Element), Rollelementen 112 und einen Innenring 120 (zweites Element) fließt. Das dargestellte Wälzlager ist in einer Querschnittsansicht zu sehen, wobei nur der obere Abschnitt dargestellt ist. Das Wälzlager lagert eine drehbare Welle, die an den Innenring 120 koppelt und in der Fig. 3 nicht dargestellt ist.

Um Störungen bei der Messung auszuschließen, umfasst das Wälzlager entsprechende Isolierungen 170, 180. So kann das Wälzlager am Außenring 110 eine Isolierung 170 aufweisen, um eine elektrische Isolierung zu einem Lagersitz für das Wälzlager bereitzustellen. Die Isolierung 170 kann als eine Schicht direkt auf den Außenring 110 aufgebracht werden oder auch als ein isolierendes Element zwischen dem Wälzlager und dem Lagersitz angeordnet sein. In gleicher Weise umfasst der Innenring 120 eine Isolierung 180 für ein drehbares Element, das durch das Wälzlager gehalten wird. Auch diese Isolierung kann entweder durch eine Beschichtung des Innenringes 120 erfolgen oder aber durch ein isolierendes Element ausgebildet sein. Die isolierenden Elemente können zum Beispiel eine Kunststoffhülse oder ein Faserverbundelement oder ein Gummielement oder andere elektrisch isolierende Elemente umfassen.

Dementsprechend koppelt die Auswerteeinheit 130 (nur schematisch in der Fig. 3 dargestellt) über den ersten elektrischen Kontakt an den Außenring 110. Diese Kopplung kann beispielsweise über einen direkten elektrischen Kontakt erfolgen. Die Kopplung der Auswerteeinheit 130 an den Innenring 120 kann beispielsweise über einen Schleifkontakt oder auch über eine kapazitive Kopplung erfolgen, um so die Drehbewegung des Innenringes 120 relativ zu dem Außenring 110 nicht durch den Kontakt zu stören bzw. trotz der Drehung einen zuverlässigen elektrischen Kontakt sicherzustellen.

Die kapazitive Kopplung zwischen der Auswerteeinheit 130 und dem Innenring 120 des Wälzlagers wird durch eine Kalibrierung ermittelt, sodass bei der fortlaufenden Überwachung des Wälzlagers nur eine Änderung der Impedanz ermittelt werden muss, die dann auf eine unzureichende Schmierung oder eine unzulässige Last oder andere Änderungen der Zustandsgröße hinweist. Der Stromfluss I zur Bestimmung der Impedanz Z oder nur ein Teil ihrer Bestandteile (Ohmscher Widerstand, Kapazität, Induktivität) kann daher insbesondere ein Wechselstromsignal mit einer bestimmten Frequenz umfassen. Die Kapazität als auch der Ohmsche Widerstand entlang des Stromflusses I hängt von der Last, dem Schmierungszustand, vorhandener Metallspäne und anderen Faktoren ab, die durch die Auswerteeinheit 130 über die Impedanzermittelung (z.B. die Änderung der Kapazität oder Änderung des Ohmschen Widerstandes) ermittelt werden können.

Um diese Messergebnisse mit einer hohen Genauigkeit zu gewährleisten, ist die Auswerteeinheit 130 optional außerdem dazu ausgebildet, um von externen Sensoren (nicht gezeigt in Fig. 3) eine Temperatur T (z.B. des Wälzlagers oder einer Umgebung) und/oder die Drehzahl n des drehbaren Elementes zu erhalten und basierend darauf die Auswertung durchzuführen. Dazu kann die Auswerteeinheit 130 ein Temperaturerfassungsmodul 132, ein Drehzahlerfassungsmodul 133, ein Impedanzermittlungsmodul 134 und ein Auswertemodul 131 umfassen. Das Auswertemodul 131 ist dann dazu ausgebildet, um das Ergebnis der ermittelten Zustandsgrößen auszugeben.

Optional ist es ebenfalls möglich, dass der Temperatursensor und/oder der Drehzahlsensor ein Teil der Vorrichtung selbst sind.

Weitere wichtige Anwendungsfälle für die vorliegende Erfindung betreffen die Messung der Lagerimpedanz, um eine Aussage über die Lagerbelastung zu treffen. Ebenso kann eine Stoßerkennung durch unrunde Räder bei fahrenden Zügen erfolgen (z.B. Stöße durch eine Unrundheit des Rades), wobei auch dies eine Änderung der Schmierspaltdicke mit jeder Umdrehung bewirkt. Somit kann die Belastung detektiert und ggf. auch quantitativ bestimmt werden. Hierbei ist eine Genauigkeit von 100 N und mehr möglich. Zusätzlich ist es möglich, eine Veränderung des Schmierstoffes selbst zu detektieren, die zu einer Änderung der Impedanz führt. So führen beispielsweise eine Ansammlung von Metallspänen in dem Schmierstoff zu einer Impedanzänderung, die durch das elektrische Signal messbar ist.

Für die Erfassung dieser Größen werden keine separaten Sensoren gebraucht. Vielmehr greifen Ausführungsbeispiele auf weitestgehend bestehenden Strukturen zurück, um die Zustandsgrößen zu erfassen. Somit sind nur minimale Änderungen an der Konstruktion erforderlich wie z.B. das Aufbringen von isolierenden Schichten, um einen definierten Strompfad I zu erreichen. Darüber hinaus sind keine weiteren Änderungen an den übrigen Konstruktionen der Maschinen erforderlich - abgesehen von den elektrischen Verbindungen 140, 150, die zum Schließen des Stromkreises an den entsprechenden Elementen 110, 120 anzubringen sind. Ausführungsbeispiele implementieren somit effektiv einen Sensor über vorhandene Strukturen. Durch das Ausbilden eines elektrischen Stromkreises I durch die beispielhaften Wälzlager können alle Zustandsgrößen berechnet werden, die eine Änderung der Impedanz zur Folge haben. Daher sind die Kosten und die Bauraumanforderungen für sehr gering.

### Bezugszeichenliste

- 110: erstes Element (z. B. Außenring eines ersten Wälzlagers)
- 112: Rollelemente des ersten Wälzlagers
- 114: Innenring des ersten Wälzlagers
- 120: zweites Element (z. B. Außenring eines zweiten Wälzlagers)
- 122: Rollelemente des zweiten Wälzlagers
- 124: Innenring des zweiten Wälzlagers
- 130: Auswerteeinheit
- 140: erste elektrische Verbindung
- 145: weitere elektrische Verbindung
- 150: zweite elektrische Verbindung
- 160: Kontaktbauteil (z. B. Schleifkontakt)
- 170,180: Isolierungen an einem Wälzlager
- 210: Elementhalterung (Lagersitze)
- I: elektrischen Stromfluss

## Patentansprüche

1. Vorrichtung zur Ermittlung einer Zustandsgröße mit:
einem ersten Element (110) und einem zweiten Element (120), die ausgebildet sind, um sich relativ zueinander zu bewegen, wobei das erste Element (110) ein Außenring eines Wälzlagers ist und das zweite Element (120) ein Innenring des Wälzlagers ist und der Stromfluss teilweise durch ein Schmiermittel führt;
einer Auswerteeinheit (130);
einer ersten elektrischen Verbindung (140) zwischen der Auswerteeinheit (130) und dem ersten Element (110); und
einer zweiten elektrischen Verbindung (150) zwischen der Auswerteeinheit (130) und dem zweiten Element (120),
wobei die Auswerteeinheit (130) ausgebildet ist, um einen elektrischen Stromfluss (I) zwischen dem ersten Element (110) und dem zweiten Element (120) zu erzeugen und eine Impedanz zu ermitteln und basierend auf der ermittelten Impedanz oder deren Änderung die Zustandsgröße zu ermitteln,
wobei die Auswerteeinheit (130) weiter ausgebildet ist, um basierend auf der ermittelten Impedanz zumindest eine der folgenden Zustandsgrößen zu ermitteln: eine radial- oder axial-wirkende Kraft, eine Schmierfilmdicke, eine Änderung des Schmiermittels, eine Drehzahl, eine Temperatur, ein Alterungsgrad, eine Wellenverlagerung, eine Belastung,
**dadurch gekennzeichnet, dass**
der Außenring (110) oder der Innenring (120) eine elektrische Isolierung (170) aufweist, um den Außenring (110) elektrisch isoliert durch einen Lagersitz zu halten oder um ein drehbares Element elektrisch isoliert von dem Innenring (120) zu lagern, sodass der elektrische Stromfluss (I) ungestört vom Lagersitz oder dem drehbaren Element von der Auswerteeinheit (130) durch das Wälzlager fließen kann, wobei die erste elektrische Verbindung (140) direkt mit dem Außenring (110) verbunden ist und die zweite elektrische Verbindung (150) an den Innenring (120) über zumindest eine der folgenden Kopplungen koppelt: eine kapazitive Kopplung, einen Schleifkontakt, wobei die kapazitive Kopplung zwischen der Auswerteeinheit (130) und dem Innenring (120) des Wälzlagers durch eine Kalibrierung ermittelt wird.

2. Vorrichtung nach Anspruch 1, wobei das erste Element (110) und/oder das zweite Element (120) ausgebildet sind, um durch zumindest eine Elementhalterung (210) gehalten zu werden, und wobei das erste Element (110) und/oder das zweite Element (120) eine Isolierschicht zur elektrischen Isolation gegenüber der Elementhalterung (210) aufweist.

3. Vorrichtung nach einem der vorhergehenden Ansprüche, die weiter ein Kontaktbauteil (160), insbesondere ein galvanisches oder ein kapazitives oder ein induktives Verbindungselement, umfasst, um einen elektrischen Kontakt zu dem ersten Element (110) oder zu dem zweiten Element (120) während der Bewegung herzustellen.

4. Vorrichtung nach einem der vorhergehenden Ansprüche, wobei die Auswerteeinheit (130) ausgebildet ist, um zumindest eine der folgenden Größe von externen Sensoren zu erhalten: eine Temperatur (T), eine Drehzahl (n) und um die Impedanz (Z) unter Nutzung dieser Größen (T, n) zu ermitteln.

5. Verfahren zur Ermittlung einer Zustandsgröße mit Hilfe einer Vorrichtung nach einem der Ansprüche 1 bis 4, mit:
Bewegen eines ersten Elementes (110) relativ zu einem zweiten Element (120), wobei das erste Element (110) ein Außenring eines Wälzlagers ist und das zweite Element (120) ein Innenring des Wälzlagers ist und der Stromfluss teilweise durch ein Schmiermittel führt, wobei der Außenring (110) oder der Innenring eine elektrische Isolierung (170,180) aufweist, um den Außenring (110) elektrisch isoliert durch einen Lagersitz zu halten oder um ein drehbares Element elektrisch isoliert von dem Innenring (120) zu lagern, sodass der elektrische Stromfluss (I) ungestört vom Lagersitz oder dem drehbaren Element von der Auswerteeinheit (130) durch das Wälzlager fließen kann, wobei die erste elektrische Verbindung (140) direkt mit dem Außenring (110) verbunden ist und die zweite elektrische Verbindung (150) an den Innenring (120) über zumindest eine der folgenden Kopplungen koppelt: eine kapazitive Kopplung, einen Schleifkontakt, wobei die kapazitive Kopplung zwischen der Auswerteeinheit (130) und dem Innenring (120) des Wälzlagers durch eine Kalibrierung ermittelt wird;
Übertragen eines Stromsignals (I) zwischen dem ersten Element (110) und dem zweiten Element (120);
Ermitteln einer Impedanz des Stromsignals (I); und
basierend auf der ermittelten Impedanz, Ermitteln der Zustandsgröße, wobei basierend auf der ermittelten Impedanz zumindest eine der folgenden Zustandsgrößen ermittelt wird:
eine radial- oder axial-wirkende Kraft, eine Schmierfilmdicke, eine Änderung des Schmiermittels, eine Drehzahl, eine Temperatur, ein Alterungsgrad, eine Wellenverlagerung, eine Belastung.

## Claims

1. Device for determining a state variable, comprising:
a first element (110) and a second element (120) which are designed to move relative to one another, the first element (110) being an outer ring of a roller bearing and the second element (120) being an inner ring of the roller bearing and partially guiding the current flow through a lubricant;
an evaluation unit (130);
a first electrical connection (140) between the evaluation unit (130) and the first element (110); and
a second electrical connection (150) between the evaluation unit (130) and the second element (120),
the evaluation unit (130) being designed to generate an electric current flow (I) between the first element (110) and the second element (120), to determine an impedance, and to determine the state variable on the basis of the determined impedance or the change thereof,
the evaluation unit (130) being further designed to determine at least one of the following state variables on the basis of the determined impedance: a radially or axially acting force, a lubricating film thickness, a change in the lubricant, a speed, a temperature, a degree of aging, a shaft displacement or a load,
**characterized in that**
the outer ring (110) or the inner ring (120) has an electrical insulation (170) in order to hold the outer ring (110) so as to be electrically insulated by a bearing seat or to support a rotatable element so as to be electrically insulated from the inner ring (120) so that the electric current flow (I) can flow-undisturbed by the bearing seat or the rotatable element-from the evaluation unit (130) through the roller bearing, the first electrical connection (140) being connected directly to the outer ring (110) and the second electrical connection (150) coupling to the inner ring (120) via at least one of the following couplings: a capacitive coupling, a sliding contact, the capacitive coupling between the evaluation unit (130) and the inner ring (120) of the roller bearing being determined by calibration.

2. Device according to claim 1, wherein the first element (110) and/or the second element (120) are designed to be held by at least one element holder (210), and wherein the first element (110) and/or the second element (120) has an insulating layer so as to be electrically insulated from the element holder (210).

3. Device according to either of the preceding claims, further comprising a contact component (160), in particular a galvanic or a capacitive or an inductive connection element, in order to establish electrical contact with the first element (110) or with the second element (120) during the movement.

4. Device according to any of the preceding claims, wherein the evaluation unit (130) is designed to obtain at least one of the following variables from external sensors: to determine a temperature (T), a speed (n) and the impedance (Z) using these variables (T, n).

5. Method for determining a state variable using a device according to any of claims 1 to 4, comprising:
moving a first element (110) relative to a second element (120), wherein the first element (110) is an outer ring of a roller bearing and the second element (120) is an inner ring of the roller bearing and partially guides the current flow through a lubricant, wherein the outer ring (110) or the inner ring has an electrical insulation (170, 180) in order to hold the outer ring (110) so as to be electrically insulated by a bearing seat or to support a rotatable element or as to be electrically insulated from the inner ring (120) so that the electric current flow (I) can flow-undisturbed by the bearing seat or the rotatable element-from the evaluation unit (130) through the roller bearing, wherein the first electrical connection (140) is connected directly to the outer ring (110) and the second electrical connection (150) couples to the inner ring (120) via at least one of the following couplings: a capacitive coupling, a sliding contact, wherein the capacitive coupling between the evaluation unit (130) and the inner ring (120) of the roller bearing is determined by calibration;
transmitting a current signal (I) between the first element (110) and the second element (120);
determining an impedance of the current signal (I); and on the basis of the determined impedance, determining the state variable, wherein at least one of the following state variables is determined on the basis of the determined impedance:
a radially or axially acting force,
a lubricating film thickness, a change in the lubricant, a speed, a temperature, a degree of aging, a shaft displacement or a load.

## Revendications

1. Dispositif permettant de déterminer une grandeur d'état comportant :
un premier élément (110) et un second élément (120) conçus pour se déplacer l'un par rapport à l'autre, le premier élément (110) étant une bague externe d'un palier à rouleaux et le second élément (120) étant une bague interne du palier à rouleaux et le flux de courant passant partiellement à travers un lubrifiant ;
une unité d'évaluation (130) ;
une première liaison électrique (140) entre l'unité d'évaluation (130) et le premier élément (110) ; et
une seconde liaison électrique (150) entre l'unité d'évaluation (130) et le second élément (120),
dans lequel l'unité d'évaluation (130) est configurée pour générer un flux de courant électrique (I) entre le premier élément (110) et le second élément (120) et pour déterminer une impédance et pour déterminer la grandeur d'état sur la base de l'impédance déterminée ou de sa modification,
dans lequel l'unité d'évaluation (130) est en outre configurée pour déterminer au moins l'une des grandeurs d'état suivantes sur la base de l'impédance déterminée : une force agissant radialement ou axialement, une épaisseur de film lubrifiant, une modification du lubrifiant, une vitesse, une température, un degré de vieillissement, un déplacement d'arbre, une charge,
**caractérisé en ce que**
la bague externe (110) ou la bague interne (120) présente une isolation électrique (170) afin de maintenir la bague externe (110) électriquement isolée par un siège de palier ou de monter un élément rotatif isolé électriquement de la bague interne (120), de sorte que le flux de courant électrique (I) peut circuler depuis l'unité d'évaluation (130) à travers le palier à rouleaux sans perturbation par le siège de palier ou l'élément rotatif, la première liaison électrique (140) étant directement reliée à la bague externe (110) et la seconde liaison électrique (150) étant couplée à la bague interne (120) par l'intermédiaire d'au moins l'un des couplages suivants : un couplage capacitif, un contact glissant, le couplage capacitif entre l'unité d'évaluation (130) et la bague interne (120) du palier à rouleaux étant déterminé par un calibrage.

2. Dispositif selon la revendication 1, dans lequel le premier élément (110) et/ou le second élément (120) sont conçus pour être maintenus par au moins un support d'élément (210), et dans lequel le premier élément (110) et/ou le second l'élément (120) présentent une couche isolante pour l'isolation électrique par rapport au support d'élément (210).

3. Dispositif selon l'une des revendications précédentes, comprenant en outre un composant de contact (160), en particulier un élément de liaison galvanique ou capacitif ou inductif, afin d'établir un contact électrique avec le premier élément (110) ou avec le second élément (120) pendant le mouvement.

4. Dispositif selon l'une des revendications précédentes, dans lequel l'unité d'évaluation (130) est configurée pour obtenir au moins l'une des grandeurs suivantes à partir de capteurs externes : une température (T), une vitesse (n), et pour déterminer l'impédance (Z) à l'aide desdites grandeurs (T, n).

5. Procédé permettant de déterminer une grandeur d'état à l'aide d'un dispositif selon l'une des revendications 1 à 4, comportant :
le déplacement d'un premier élément (110) par rapport à un second élément (120), le premier élément (110) étant une bague externe d'un palier à rouleaux et le second élément (120) étant une bague interne du palier à rouleaux et le flux de courant passant partiellement à travers un lubrifiant, la bague externe (110) ou la bague interne présentant une isolation électrique (170, 180) afin de maintenir la bague externe (110) isolée électriquement par un siège de palier ou de monter un élément rotatif isolé électriquement de la bague interne (120), de sorte que le flux de courant électrique (I) peut circuler depuis l'unité d'évaluation (130) à travers le palier à rouleaux sans perturbation par le siège de palier ou l'élément rotatif, la première liaison électrique (140) étant reliée à la bague externe (110) et la seconde liaison électrique (150) étant couplée à la bague interne (120) par l'intermédiaire d'au moins l'un des couplages suivants : un couplage capacitif, un contact glissant, le couplage capacitif entre l'unité d'évaluation (130) et la bague interne (120) du palier à rouleaux étant déterminé par un calibrage ;
la transmission d'un signal de courant (I) entre le premier élément (110) et le second élément (120) ;
la détermination d'une impédance du signal de courant (I) ; et
sur la base de l'impédance déterminée, la détermination de la grandeur d'état, dans lequel au moins l'une des grandeurs d'état suivantes est déterminée sur la base de l'impédance déterminée :
une force agissant radialement ou axialement,
une épaisseur de film lubrifiant, une modification du lubrifiant, une vitesse, une température, un degré de vieillissement, un déplacement d'arbre, une charge.
